Europäisches Patentamt

European Patent Office

Office européen des brevets

(19)

(11) Numéro de publication: **0 380 889**

**A1**

(12)

# DEMANDE DE BREVET EUROPEEN

(21) Numéro de dépôt: **89400253.4**

(22) Date de dépôt: **30.01.89**

(51) Int. Cl.⁵: **G11C 27/02**

(43) Date de publication de la demande:
**08.08.90 Bulletin 90/32**

(84) Etats contractants désignés:
**DE GB IT**

(71) Demandeur: **COMPAGNIE DE SIGNAUX ET D'EQUIPEMENTS ELECTRONIQUES**
**99, avenue Aristide Briand**
**F-92120 Montrouge(FR)**

(72) Inventeur: **Pradat, Philippe**
**21, rue des Bergères**
**F-91940 Les Ulis(FR)**

(74) Mandataire: **Chameroy, Claude et al**
**c/o Cabinet Malemont 42, avenue du**
**Président Wilson**
**F-75116 Paris(FR)**

(54) **Procédé et dispositif pour s'affranchir des perturbations engendrées par les commutateurs de puissance.**

(57) Dispositif pour s'affranchir des perturbations engendrées par un ou plusieurs commutateurs de puissance sur un signal électrique donné, caractérisé en ce qu'il comprend :
- un interrupteur électronique (I) interposé sur la ligne (E,S) de propagation du signal,
- un générateur (G) d'une impulsion de durée programmée commandant le fonctionnement de cet interrupteur (I), et
- un circuit à retard (R) recevant l'ordre de commutation du ou des commutateurs perturbateurs, pour déclencher le générateur d'impulsion (G) au moment où la commutation de puissance a lieu.

EP 0 380 889 A1

## Procédé et dispositif pour s'affranchir des perturbations engendrées par les commutateurs de puissance

La présente invention concerne un procédé et un dispositif pour s'affranchir des perturbations engendrées par un ou plusieurs commutateurs de puissance sur un signal électrique donné. Elle a trait également à un procédé pour s'affranchir des perturbations engendrées par ces mêmes commutateurs sur un système de traitement numérique.

Dans la plupart des convertisseurs d'énergie à commutateurs électroniques de puissance à découpage se pose le problème crucial de la coexistence forcée entre une électronique bas niveau et l'électronique de puisance elle-même. Cette dernière est génératrice de parasites importants, soit par conduction, soit par rayonnement, parasites pouvant à la fois perturber l'électronique de commande du convertisseur, ce qui peut dégrader ses propres performances, et d'éventuels coffrets d'électronique voisins ou connectés au convertisseur. D'une manière générale, on peut dire que l'ensemble des signaux est perturbé à des degrés divers par la commutation de puissance.

On est donc obligé de prévoir des filtres dans tous les circuits et d'imposer par ailleurs des normes draconiennes aux niveaux de perturbations émis par les circuits de puissance, ce qui va pratiquement à l'encontre de leur évolution naturelle vers les grandes vitesses de commutation pour des puissances de plus en plus élevées.

Les perturbations émises par les circuits de puissance sont caractérisées par une grande richesse harmonique et un spectre très large décalé vers les hautes fréquences, de 500 kHz à 30 MHz.

Pour le traitement d'un signal analogique, on est donc conduit naturellement à utiliser un filtre passe-bas. Toutefois, la puissance de la perturbation est telle que les atténuations nécessaires conduisent à utiliser, soit des filtres d'ordre très élevé, soit des filtres à fréquence de coupure très basse. Ces filtres apauvrissent considérablement l'information contenue dans le signal et entraînent des retards de phase tels que l'on est obligé d'accepter l'une des deux contraintes suivantes (ou les deux) :

- diminuer les performances du systeme en réduisant les bandes passantes et/ou les marges de stabilité,
- augmenter artificiellement la fréquence de découpage des commutateurs de puissance, donc les pertes, simplement pour essayer de décaler au mieux le spectre vers les hautes fréquences, ce qui permet de minimiser la dégradation causée par le filtre.

Par ailleurs, les filtres complexes à amplificateurs opérationnels sont inopérants pour la réjection du bruit de commutation, car le spectre du bruit sort largement de la bande des amplificateurs les plus performants. Les seuls filtres offrant une certaine efficacité sont donc les filtres passifs.

Quant au problème posé par le traitement des signaux logiques, il est voisin du cas du signal analogique dans la mesure où des changements d'état, dus au bruit, d'une logique asynchrone entraînent la plupart du temps des changements de configuration intempestifs. C'est le cas par exemple des logiques de mise en oeuvre ou de sécurité. On est donc là encore obligé d'utiliser des filtres, ce qui est un obstacle très gênant pour une logique de sécurité que l'on voudrait à réaction rapide, par exemple.

La présente invention a donc pour but principal de remédier à ces inconvénients et, pour ce faire, elle a pour objet un procédé qui se caractérise essentiellement en ce qu'il consiste à bloquer la propagation du signal pendant la durée de la perturbation.

En effet, les perturbations de forte puissance émises par un convertisseur à découpage sont dans la plupart des cas précédées par un ordre de commande à bas niveau. On dispose donc à tout instant de l'information permettant d'anticiper sur l'évènement perturbateur, ce qui permet de réaliser un filtrage temporel, par opposition aux techniques de filtrage fréquentiel utilisées juqu'ici.

Un dispositif pour la mise en oeuvre de ce procédé est caractérisé en ce qu'il comprend :
- un interrupteur électronique interposé sur la ligne de propagation du signal,
- un générateur d'une impulsion de durée programmée commandant le fonctionnement de cet interrupteur, et
- un circuit à retard recevant l'ordre de commutation du ou des commutateurs perturbateurs, pour déclencher le générateur d'impulsion au moment où la commutation de puissance a lieu.

De préférence, les ordres de commutation sont distribués dans tous les circuits sensibles par l'intermédiaire d'un bus.

Il est ainsi possible de réaliser de façon simple et peu coûteuse un filtrage temporel sur tous les circuits susceptibles d'être perturbés.

On sait par ailleurs que pour limiter les perturbations induites par les commutateurs sur les systèmes de traitement numérique, par exemple les microprocesseurs, on est amené à imposer des normes d'antiparasitage sévères aux convertisseurs de puissance à commutation. De plus, pour limiter la propagation des bruits conduits, on dresse des barrières galvaniques et faradiques entre les réseaux bas niveaux et les réseaux de puissance. Cette démarche est évidemment un obstacle a l'intégration de commandes à microprocesseurs dans les convertisseurs performants.

Pour remédier à cet inconvénient, le procédé selon l'invention consiste à générer des exceptions dans le fonctionnement du système pendant la durée de la perturbation.

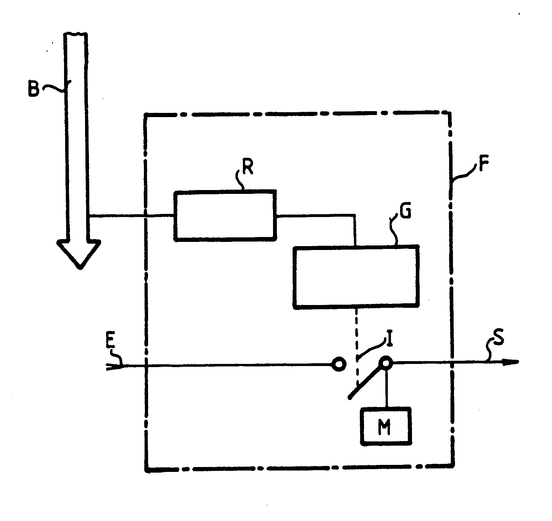

Une forme d'exécution de l'invention est décrite ci-après à titre d'exemple, en référence au dessin annexé dans lequel la figure unique est un schéma synoptique d'un module de filtrage temporel conforme à l'invention.

Ce module de filtrage, désigné dans son ensemble par la référence F reçoit sur son entrée E le signal logique ou analogique à filtrer et délivre à sa sortie S le même signal filtré.

Entre l'entrée E et la sortie S est interposé un interrupteur électronique I associé à un circuit de mémorisation M. Cet interrupteur est commandé par un générateur d'impulsion G, qui est lui-même déclenché par un circuit à retard R recevant l'ordre de commutation des commutateurs de puissance par l'intermédiaire d'un bus B. Le bus B distribue ainsi le cadencement des ordres de commutation dans tous les circuits sensibles, y compris à l'intérieur du convertisseur lui-même, ce qui permet de régler le problème de l'autoperturbation.

Le circuit à retard R introduit un retard correspondant au temps de propagation de l'ordre de commutation de puissance et déclenche par conséquent le générateur d'impulsion G au moment précis où la commutation de puissance a lieu. Quant au générateur G, il engendre un impulsion dont la durée programmée correspond à la durée, a priori connue, de la perturbation de puissance, provoquant ainsi un échantillonnage blocage du signal par l'intermédiaire de l'interrupteur électronique I.

Le circuit de mémorisation M stocke la dernière valeur atteinte par le signal au moment de l'ouverture de l'interrupteur I et rallie la valeur réelle à la fermeture. Il travaille alors en suiveur.

Le module de filtrage F est dont alternativement bloqueur et suiveur, et permet ainsi de réaliser un filtrage temporel du signal logique ou analogique.

Dans le cas du traitement numérique, les horloges des microprocesseurs ont des fréquences voisines des raies les plus intenses des spectres d'impulsions de commutation. Il faut donc dans ce cas générer à partir du même bus de commutation B des exceptions à l'intérieur du système microprocesseur. Les exceptions peuvent concerner une zone étendue du fonctionnement si la fréquence des perturbations est faible ou si la période de calcul est suffisamment longue. Elles peuvent dans les cas contraires être localisées à des opérations sensibles au sens de la fiabilité du logiciel.

## Revendications

1. Procédé pour s'affranchir des perturbations engendrées par un ou plusieurs commutateurs de puissance sur un signal électrique donné, caractérisé en ce qu'il consiste à bloquer la propagation du signal pendant la durée de la perturbation.

2. Procédé pour s'affranchir des perturbations engendrées par un ou plusieurs commutateurs de puissance sur un système de traitement numérique, caractérisé en ce qu'il consiste à générer des exceptions dans le fonctionnement du système pendant la durée de la perturbation.

3. Procédé selon la revendication 1 ou 2, caractérisé en ce que les ordres de commutation sont distribués dans tous les circuits sensibles par l'intermédiaire d'un bus (B).

4. Dispositif pour la mise en oeuvre du procédé selon la revendication 1, caractérisé en ce qu'il comprend :
- un interrupteur electronique (I) interposé sur la ligne (E,S) de propagation du signal,
- un générateur (G) d'une impulsion de durée programmée commandant le fonctionnement de cet interrupteur (I), et
- un circuit à retard (R) recevant l'ordre de commutation du ou des commutateurs perturbateurs, pour déclencher le générateur d'impulsion (G) au moment où la commutation de puissance a lieu.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | PATENT ABSTRACTS OF JAPAN, vol. 7, no. 15 (P-169)[1160], 21 janvier 1983; & JP-A-57 169 999 (YUNIBAASARU PAIONIA K.K.) 19-10-1982 * En entier * | 1,3,4 | G 11 C 27/02 |
| X | IBM TECHNICAL DISCLOSURE BULLETIN, vol. 25, no. 9, février 1983, pages 4913-4914, New York, US; H. EGUCHI: "Sample and hold-type mark detector" * En entier * | 1 | |
| A | US-A-4 150 310 (SANGAMO WESTON) * Colonne 2, ligne 9 - colonne 4, ligne 5; figures 1,2 * | 1,2 | |
| A | PATENT ABSTRACTS OF JAPAN, vol. 9, no. 65 (E-304), 26 mars 1985; & JP-A-59 201 586 (CANON K.K.) 15-11-1984 | 1,3 | |
| A | US-A-3 428 829 (BELL TELEPHONE) * Colonne 2, page 64 - colonne 3, page 72; figures 1-3 * | 1 | **DOMAINES TECHNIQUES RECHERCHES (Int. Cl.5)**<br><br>G 11 C 27/02 |

Le présent rapport a été établi pour toutes les revendications

| Lieu de la recherche | Date d'achèvement de la recherche | Examinateur |
|---|---|---|
| LA HAYE | 08-11-1989 | DEGRAEVE L.W.G. |